# EUROPEAN PATENT APPLICATION

(11) **EP 3 348 500 A1**
(43) Date of publication of application: **18.07.2018**
(21) Application number: 17151410.2
(22) Date of filing: 13.01.2017
(51) Int. Cl.: B65G 47/88, B65G 47/29

(54) **LUMBER FEEDER WITH SEPARATION WHEEL**

(71) Applicant: System TM A/S, 8300 Odder (DK)
(72) Inventor: Larsen, Niels Peter, 8300 Odder (DK)
(74) Representative: Plougmann Vingtoft a/s

(57) **Abstract**

There is presented a method and a corresponding system for receiving wood blocks, separating wood blocks and feeding the separated wood blocks, said method comprising transporting wood blocks via a feeding conveyor (101) to a separation wheel (102), said separation wheel comprising one or more circumferentially arranged stopping fingers, and one or more idler rolls, the method further comprising arranging the separation wheel (102) in one of one or more rest positions, blocking a first wood block (111) by said first wood block (111) contacting one of the one or more stopping fingers, rotating the separation wheel (102), wherein during said rotating an idler roll (622) of the separation wheel presses said first wood block against a driven roll (103), moving by means of the driven roll (103) the first wood block (111) in a transport direction (106), thereby transferring the first wood block to a receiving conveyor (104), and arranging, after said rotating, the separation wheel (102) in the same or another rest position.

## Description

### FIELD OF THE INVENTION

The present invention relates to a feeder for receiving, separating and feeding wood blocks in a wood handling apparatus. More particularly, the invention relates to a feeder having a separation wheel being arranged for allowing passage of a single wood block at a time, while blocking passage of other wood blocks.

### BACKGROUND OF THE INVENTION

A number of applications exist in which it is desirable to have a predetermined spacing between two consecutive and aligned items. In the wood industry, it is often preferable to space wood blocks apart, e.g. when feeding wood working machines such as finger jointers. However, a number of problems exist with the known solutions. First of all, they may be unsuitable for wood blocks having variable lengths, which are transported parallel to these variable lengths. Secondly, they may have a relatively low capacity in terms of wood blocks/minute.

Hence, an improved feeder would be advantageous, and in particular a feeder suitable for feeding wood blocks of varying lengths, which are transported parallel to these variable lengths, and which enables a higher capacity would be advantageous.

### SUMMARY OF THE INVENTION

It is an object of the present invention to provide a feeder for receiving, separating and feeding wood blocks in a wood handling apparatus, which is suitable for feeding wood blocks of varying lengths, and which has a high capacity.

It is a further object of the present invention to provide an alternative to the prior art.

In particular, it be seen as an object of the present invention to provide a feeder that solves the above mentioned problems of the prior art with limited capacity and limitations in terms of wood block characteristics.

Thus, the above described object and several other objects are intended to be obtained in a first aspect of the invention by providing a feeder for receiving, separating and feeding wood blocks in a wood handling apparatus.

In a first aspect of the invention, a method for receiving wood blocks, such as prismatic wood blocks, such as wood blocks having two opposing, polygonal faces and parallel sides defined between the two faces, is provided, separating wood blocks (thereby providing one or more separated wood blocks) and feeding the separated wood blocks, said method comprising
- transporting wood blocks via a feeding conveyor to a separation
   wheel, said separation wheel comprising
   i. one or more circumferentially arranged stopping fingers, and
   ii. one or more idler rolls,
- arranging the separation wheel in one of one or more rest positions where in each of the one or more rest positions a stopping finger (such as a stopping finger within the one or more circumferentially arranged stopping fingers) is arranged to block passage of a wood block from the feeding conveyor to a receiving conveyor arranged for receiving wood blocks from the separation wheel and transporting the wood blocks away from the separation wheel,
- blocking a first wood block by said first wood block contacting one of the one or more stopping fingers,
- rotating the separation wheel, wherein during said rotating an idler roll of the separation wheel presses said first wood block against a driven roll,
- moving by means of the driven roll the first wood block in a transport direction, thereby transferring the first wood block to the receiving conveyor, and
- arranging, after said rotating, the separation wheel in the same or another rest position.

The method according to the first aspect of the invention is advantageous, as it ensures via the separation wheel, that passage of a single wood block at a time is allowed. This may enable feeding wood blocks at a controllable rate and/or with a predetermined spacing between each of the wood blocks, which is often preferable, when the wood blocks are to be handled by a piece of machinery, such as a finger jointer.

The method according to the invention has the advantage of having a very high capacity in terms of wood blocks/minute. The interaction between the idler rolls of the separation wheel and the feed roll ensures a very high capacity and optionally with a minimal wear. The capacity of such a system may be at least 50 wood blocks/minute, such as at least 100 wood blocks/minute, such as 120 or more than 120 wood blocks/minute, such as at least 150 wood blocks/minute, such as 180 or more wood blocks/minute, such as at least at least 220 wood blocks/minute, such as at least 250 wood blocks/minute, such as 250 or more than 250 wood blocks/minute. The capacity of such a system may be 180 wood blocks/minute, such as the system may be arranged for handling any rate of wood blocks within 0-180 wood blocks/minute. When referring to capacity, this may be understood to be for a situation with wood blocks having the following dimensions: Width (uniform): 25-305 mm, such as 40-205 mm, such as 100 mm; thickness (uniform): 16-80 mm, such as 40 mm; length (randomly distributed within this interval, such as non-uniform and unknown): 110-1000 mm, such as 110-900 mm. Alternatively, when referring to capacity, this may be understood to be for a situation with wood blocks having the following dimensions: Widths uniform within 40-205 mm, thicknesses uniform within 16-80 mm and lengths randomly distributed within 110-900 mm.

The high capacity is or may be facilitated by having wood blocks queueing with adjoining end faces on the feeding conveyor, such as an accumulation conveyor, the first wood block, such as the front most wood block (i.e., the wood block on the feeding conveyor being closest to the separation wheel), being stopped by a stopping finger of the separation wheel being in a rest position. The fist wood block will thus be in rest and will have a speed of 0 m/s in the transport direction. Once the separation wheel rotates and the wood block is pressed against the driven roll, i.e. the wood block is clamped between the idler roll and the driven roll, the wood block experiences an acceleration due to the driven roll engaging with the wood block, for example by exerting a normal force and/or a friction force to the wood block, which allows the wood block to be moved in the transport direction at a speed corresponding to the rotational speed of the driven roll. In this way, the wood block is rapidly accelerated and may continue travelling on the receiving conveyor.

The invention is particularly, but not exclusively, advantageous for handling wood blocks having a length distribution, such as wood blocks of arbitrary lengths, where it is unknown prior to initiating the method, which length the first and all other wood blocks have, and where the length may be different from one wood block to the next. By 'length' is here understood a dimension of the wood blocks measured in a direction parallel to the transport direction. By 'wood block' is generally understood a wooden element, such as a prismatic wooden element. Each wood block may be prismatic. By 'prismatic' may be understood a solid object with two similar or identical ends (or end faces, which may be polygonal, such as rectangular) and flat sides, where the sides are parallelograms (4-sided shape with opposites sides parallel) and where the cross section (in any plane parallel with the end faces) is the same anywhere, in particular all along a distance between the end faces. Each prismatic wood block may be elongated, i.e., have a longest dimension exceeding each of the other two dimensions (e.g., length exceeding each of width and thickness) and in this case the longest dimension will be between the end faces.

In terms of dimensions, the wood blocks may be prismatic with rectangular end faces and uniform width (such as measured in a direction orthogonal to a transport direction on the feeding conveyor and parallel to an axis of the separation wheel) in the range 25-305 mm, such as 40-205 mm, a thickness in the range 16-80 mm (such as measured in a direction orthogonal to a transport direction on the feeding conveyor and orthogonal to an axis of the separation wheel) and lengths in a range 110-1000 mm (such as measured in a direction parallel with a transport direction on the feeding conveyor). In an embodiment, the widths are uniform within 40-205 mm, thicknesses are uniform within 16-80 mm and lengths are randomly distributed within 110-900 mm. Each of the width and the height may in general be uniform, i.e., each wood block has identical, similar or substantially similar widths, respectively, heights (the width may be different from the height). The lengths of the wood blocks may be different with respect to each other. The lengths of the individual wood blocks may be unknown.

'Separation wheel' is understood as is common in the art. According to the present invention the separation wheel furthermore comprises one or more idler rolls. An advantage of the separation wheel comprising idler rolls (as opposed to driven rolls), which may be facilitated by having a driven roll outside the separation wheel, may be that it facilitates providing a relatively simple and/or compact separation wheel. This may in turn save space and/or facilitate rapid operation because the moment of inertia can be kept relatively low (which in turn allows rapid starting and stopping with smaller application of force, such as torque). The separation wheel may have the same number of stopping fingers and idler rolls. Each of the one or more stopping fingers and the one or more idler rolls may be equally distributed around the separation wheel.

The separation wheel may comprise indentations so that a portion of a blocked wood block is placed closer to the centre of the separation wheel than at least a part of at least one idler roll (such as said idler roll being an idler roll paired with the blocking stopping finger). Thereby, rotation (in a direction where the blocking finger is rotated away from the blocked wood block) of the separation wheel may entail that the hitherto blocked wood block is in the path of at least a part of the idler roll, which may then contact and displace the wood block and press it against the driven roll.

By 'rest position' is understood an angular position of the wheel where the separation wheel may stand still (i.e., not being rotated, such as angular rotation speed being 0 radians/second) and block passage of a wood block via a stopping finger being position in the path of the wood block. By rotation to the same rest position may be understood that the separation wheel is rotated in integer number of full revolution and/or is rotated forth and back so that the same stopping finger ends up in a blocking position. By another rest position is understood another angular position where another stopping finger is in a rest position. The separation wheel may according to the method stand still in the rest position (i.e., 0 degrees/second).

By an 'idler roll' may be understood an non-driven roll, which may aid in reducing the necessary forces and/or wear associated with an element being transported past the roller and in contact with the roller. Idler rolls may yield the advantage that wood blocks may be supported by the driven roll on one side and an idler roll on an opposite side, which means that a wood block may be transferred to the receiving conveyor using relatively low force and with little wear. As the idler rolls are not driven, and the feed roll is driven, a wood block being supported between the two may be easily accelerated by the feed roll without the need for a high degree of friction and/or force. Therefore, the lifetime of the driven roll may be prolonged, as wear of the driven roll is minimised. Further, the wood blocks are subjected to a minimum of frictional force, which facilitates a smooth and gentle handling.

The idler rolls may be positioned relative to the stopping fingers so that each of said stopping fingers and said idler rolls are arranged in pairs, each pair comprising a stopping finger and an idler roll, and wherein before said rotating, a stopping finger in a pair blocks passage of a wood block and during rotating an idler roll in the pair presses upon the wood block.

By 'driven roll' may be understood a roll where applied torque causes the roll to rotate so as to enable moving a wood block at its periphery. The driven roll may be circular in shape. The driven roll may have a steel surface and/or a rubber surface, such as a rubber coated surface, arranged for engaging with the wood blocks. A possible advantage of a steel surface may be durability. A possible advantage of a rubber surface may be increased friction, which may in turn facilitate high acceleration of the wood blocks.

The axles of any idler roll and the driven roll may each be perpendicular to a transport direction, such as a transport direction from the feeding conveyor to the receiving conveyor.

By 'transport direction' is understood the direction (at any time and position) in which the wood blocks are moved or are intended to be moved.

According to an embodiment, the method according to the present invention may further comprise that during the rotating of the separation wheel,
- the stopping finger blocking passage of the first wood block is moved away from a position blocking passage of the first wood block
   and/or
- the idler roll, which presses upon the first wood block, displaces the wood block
so that the rotating of the separation wheel enables and ensures passage of the first wood. By removal of the stopping finger, the path may be laid open for the hitherto blocked wood block. Furthermore, by arranging the separation wheel so that the idler wheel upon rotation of the separation wheel may displace, such as lift, the wood block into contact with the driven roll, transfer to the receiving conveyor may be expedited.

According to an embodiment, the method according to the present invention may further comprise that said arranging, after said rotating, the separation wheel in the same or another rest position is carried out so that a second wood block is blocked thereby enabling and ensuring passage of only the first wood block in connection with said rotating. This may ensure, via the separation wheel, passage of a single wood block at a time. This may thus enable feeding single, spatially and temporally separated wood blocks at a controllable, optionally high, rate and/or with a predetermined spacing between each of the wood blocks, which may be preferable, e.g., when the wood blocks are to be handled by a subsequent piece of machinery, such as a finger jointer or scanning equipment.

According to a further embodiment, the invention may comprise that a largest dimension of each of the wood blocks during transport with the feeding conveyor is parallel with a conveying direction of the feeding conveyor. The wood blocks may be elongated and aligned with the longitudinal (longest) axis parallel with a transport direction, at least on the feeding conveyor.

According to an embodiment of the present invention, the separation wheel may comprise a number N of stopping fingers, N being greater than or equal to 1, wherein a rotation of said separation wheel corresponds to 1/N parts of a complete revolution, so that the separation wheel may be stopped in N number of rest positions during a full revolution. By 'full revolution' may be understood a complete 360 degrees (2 x pi) turn of the separation wheel. The number of stopping fingers N may be 1-15, such as 1-10, such as 2-10, such as 2-7, such as 4-7, such as 5-6, such as 4, such as 5, such as 6, such as 7. The number of stopping fingers may depend on the shortest length of the wood blocks (i.e., the shortest possible length of the wood block, i.e., the short end of the interval within which the lengths of the wood blocks are distributed), measured parallel to the transport direction, as well as the diameter of the separation wheel. A relevant parameter is the tangential distance between each of the stopping fingers, which has to be smaller than or equal to the length of the shortest (possible) wood block. The inventors have made successful experiments with a distance from stopping finger to stopping finger of approximately half of the length of the shortest (possible) wood block. The diameter of the separation wheel (such as the diameter of a circle circumscribing the separation wheel) may be 0-500 mm, such as 50-500 mm, such as 50-300 mm, such as 50-250 mm, such as 50-220 mm, such as 50 -200 mm, such as 50-150 mm, such as 50-130 mm, such as 50-110 mm. The radius of the separation wheel (such as the radius of a circle circumscribing the separation wheel) may be equal to or less than the shortest possible length of the wood blocks, such as the radius R may be related to shortest possible length Lₘᵢₙ by R ∈ [0.1 x Lₘᵢₙ; Lₘᵢₙ], such as [0.25 x Lₘᵢₙ; Lₘᵢₙ], such as [0.25 x Lₘᵢₙ; 0.75 x Lₘᵢₙ].

According to an embodiment of the invention, an open time slot may be defined as a time it takes for the separation wheel to rotate 1/N parts of a complete revolution, wherein
- said open time slot,
   is less than
- a minimum wood block length (such as in a direction parallel to the transport direction) divided by a feeding conveyor speed.

This embodiment may present the advantage that only a single wood block will be allowed to pass the separation wheel at a time, and it will not be possible for a further wood block travelling towards the separation wheel on the feeding conveyor to pass, regardless of the lengths of those two wood blocks.

According to an embodiment of the method according to the present invention, the driven roll may be arranged in relation to the separation wheel so that, when the separation wheel is in a rest position, a smallest distance between the separation wheel and the driven roll is smaller than a dimension of a wood block measured in a direction perpendicular to the transport direction and perpendicular to an axis of the separation wheel. This has the possible advantage of ensuring that a wood block, which has not yet made contact with a stopping finger, cannot travel over a stopping finger in a rest position of the separation wheel. The system may be arranged so that it may sort wood blocks with said dimension being larger than said smallest distance (for example by having the driven roll being mounted so it may be displaced, e.g., by the pressure applied by the idler roll).

According to an embodiment of the invention, in the rest position, at least one idler roll may be arranged to have an outer surface which is closer to the driven roll than any stopping finger. This embodiment may be advantageous as it ensures that a wood block travelling from the feeding conveyor to the receiving conveyor may be pressed against the idler roll rather than the top of a stopping finger. Thus, a lower degree of friction and/or normal force needs to be exerted by the driven roll, and therefore wear of the driven roll is minimised. By 'closer to the driven roll' may be understood that if an imaginary line (being orthogonal to both an axle of the idler roll and an axle of the driven roll) is drawn from the axle of the driven roll to the axle of the separation wheel, the outer surface of the idler roll will be closer to the driven roll along this imaginary line than any stopping finger, including the stopping finger, which is arranged so as to block passage of a wood block.

According to an embodiment of the invention, during said rotating, such as in a rest position after said rotating, at least one idler roll (such as the idler roll displacing the wood block) may be arranged to have an outer surface, which is closer to the driven roll than a thickness of the wood block (such as so as to ensure that the idler roll during said rotating presses the wood block against the driven roll).

According to an embodiment of the present invention, blocking a first wood block by means of the separation wheel may be achieved by having at least one stopping finger being positioned in the path of said first wood block being transported in the transport direction by the feeding conveyor, so as to cause said first wood block to contact with and be stopped by said stopping finger.

According to an embodiment of the present invention, the method may further comprise sensing when a sensed wood block is positioned at the stop finger (such as touching the stopping finger) so that said rotation of the separation wheel would cause said sensed wood block to be moved in the transport direction.

According to an embodiment of the present invention, the method may further comprise sensing when a sensed wood block is positioned so that it is in contact with or above at least one idler roll.

According to an embodiment of the present invention, the separation wheel may be arranged to provide a minimum distance (in time and/or space) between a first and a second wood block on the receiving conveyor, said minimum distance being provided by the separation wheel rotating, after the first wood block has been transferred to the receiving conveyor, when (such as only when) the following conditions are fulfilled
- a predetermined minimum distance to the first wood block is fulfilled, and
- the second wood block is positioned so as to be transferable to the receiving conveyor upon rotating of the separation wheel.

Thus, a predetermined minimum distance is ensured (i.e., even if the second wood block is ready for transfer immediately after the first wood block, then it is not transferred before the condition of predetermined minimum distance is fulfilled), and it is ensured that the separation wheel does not rotate in a case where there will be no transfer.

According to an embodiment of the present invention, the separation wheel may be rotated and stopped in a number of rest positions according to a predetermined tact, such as said predetermined tact corresponding to a rate at which wood blocks are desired to be received at the receiving conveyor, such as a said tact corresponding to a predetermined minimum distance (in time and/or space) between a first and a second wood block on the receiving conveyor.

According to a second aspect of the present invention, the invention relates to a feeder system for receiving wood blocks, separating wood blocks and feeding the separated wood blocks, said feeder system comprising
- a separation wheel comprising
   i. one or more circumferentially arranged stopping fingers, and
   ii. one or more idler rolls,
- a feeding conveyor arranged for transporting wood blocks to the separation wheel and feeding wood blocks to the separation wheel,
- a receiving conveyor arranged for receiving wood blocks from the separation wheel and transporting the wood blocks away from the separation wheel,
- a driven roll,
wherein the separation wheel may stopped in one or more rest positions and may furthermore be rotated from one rest position to the same or another rest position (such as the feeder system comprising a motor controlled by a processor arranged to rotate the separation wheel from one rest position to the next, and stop temporarily at each rest position), where in each of the one or more rest positions a stopping finger is arranged to block passage of a wood block from the feeding conveyor to the receiving conveyor (such as by having a stopping finger protrude from below to above a plane coincident with a plane of a surface of the feeding conveyor), and
wherein, during a rotation of said separation wheel from one rest position to the same (such as in case of the separation wheel making a full revolution, e.g., in case the separation wheel has only one stopping finger) or another rest position (such as in case of the separation wheel having more than one stopping finger), the separation wheel is arranged so that an idler roll may press a wood block against the driven roll so as to enable the driven roll to engage with the wood block and to move the wood block in a transport direction thereby enabling the wood block to be transferred to the receiving conveyor.

The feeding conveyor may comprise a transport surface configured for transporting wood blocks lying on the transport surface in a transport direction. The feeding conveyor may also be arranged for receiving a wood blocks, e.g. from a rotary table.

The separation wheel may be positioned downstream from the feeding conveyor and upstream from the receiving conveyor in the transport direction.

Blocking of wood blocks may be carried out by blocking a first wood block, such as a front most wood block, i.e. a wood block on the feeding conveyor side being closest to and blocked by the stopping finger of the separation wheel. This blocked, front most wood block is, via an idler roll, pressed against the driven roll and moved past the separation wheel towards and/or onto the receiving conveyor.

In an embodiment, the feeder system enables feeding 50 or more wood blocks/minute, such as 100 or more wood blocks/minute, such as 120 or more wood blocks/minute, such as 150 or more wood blocks/minute, such as 180 or more wood blocks/minute, such as 200 or more wood blocks/minute, such as 220 or more wood blocks/minute, such as 250 or more wood blocks/minute.

According to an embodiment of the present invention, the feeding conveyor may be an accumulation conveyor, such as an accumulation conveyor being configured for supporting wood blocks queueing to be fed to the receiving conveyor. A possible advantage of this may be that it may ensure a short distance between wood blocks to be fed to the receiving conveyor. It may furthermore be an advantage, that the friction between the accumulation conveyor and the wood blocks may be relatively low (which may help in reducing wear), since this friction is not required for accelerating the (first) wood block from a blocked position (with typically a speed of 0 m/s) via the separation wheel to the receiving conveyor (because this acceleration may be carried out via a force applied specifically to this single wood block by the pressing idler roll and the driven roll).

According to an embodiment of the invention, the separation wheel may be arranged to allow passage of a single wood block at a time. This may be seen as being enabled via the arrangement between the separation wheel, the idler roll and the driven roll.

According to an embodiment of the feeder system according to the present invention, in an operating condition of the system, the driven roll may be placed above the separation wheel. This may help to ensure that gravity keeps the wood block away from the driven roll until the rotation of the separation wheel causes the idler roll to lift the wood block in contact with the driven roll. By 'above' may be understood in a direction parallel to gravity, wherein above means further away from the centre of the Earth.

In an alternative embodiment, the driven roll is placed below or substantially below the separation wheel in an operating condition of the system, relative to a plane perpendicular to the transport direction. 'Below' is understood to be opposite to 'above'.

According to an embodiment of the feeder system according to the present invention, the system may further comprise a sensor being arranged to detect when a sensed wood block is positioned so that said rotation of the separation wheel would cause said sensed wood block to be moved in the transport direction.

According to an embodiment of the invention, the driven roll may be arranged on an axle with suspension, such as suspension being e.g. air or spring, which, in an operating state, allows the feed roll to bounce in a plane non-parallel to the transport direction, such as perpendicular or substantially perpendicular to the transport direction, in response to impacts from wood blocks. The suspension may e.g. be facilitated by a pneumatic cylinder.

According to an embodiment of the invention the driven roll and the feeding conveyor are arranged so that
- an acceleration of a wood block pressed against the driven roll,
   is larger than
- an acceleration of a wood block on the feeding conveyor.

An advantage of this may be that it facilitates increasing the capacity of the feeder system. The sooner a wood block can be moved a predetermined distance (corresponding to a predetermined spacing) after being separated, the sooner the next wood block can be transferred from the feeding conveyor to the receiving conveyor (and this time is reduced via an increased acceleration), and the higher the capacity of the system.

In general, the acceleration may be understood to be the instantaneous acceleration when the speed is zero, such as the acceleration at the moment in time immediately after a stopping finger or a wood block has been removed for, respectively, the first and second wood block, and each of the wood blocks is accelerated.

A relatively high acceleration of the wood blocks between the idler rolls and the driven roll with respect to an acceleration of a wood block on the feeding conveyor may be realized by one or more of:
- having
   i. a friction coefficient between wood and a surface of the driven roll
      being larger than
   ii. a friction coefficient between wood and a conveying surface of the feeding conveyor,
- having the surface of the driven roll move faster than the surface of the feeding conveyor,
   and/or
- having
   i. a normal force exerted by the driven roll on the wood block being larger than (such as 40-300 times larger than)
   ii. a mass of the (same) wood block multiplied by 9.8 m/s² (such as corresponding to the weight of the wood block on the surface of the earth, which may correspond to a normal force exerted by a surface of the feeding conveyor on the (same)
wood block for a horizontal feeding conveyor).

The larger the friction coefficient, the larger the friction force and the larger the acceleration. The larger the normal force, the larger the friction force and the larger the acceleration. A normal force exerted by the driven roll on the wood block may be within the range 100-400 N, such as within 200-300 N.

The driven roll may have a surface arranged to engage with a wood block, which has a higher coefficient of friction than steel, such as by adding a texture and/or an adhesive and/or a rubber coating. This has the advantage that for the same normal force, a higher force in the transport direction can be applied to the wood block, and hence, the wood block may be accelerated to a higher degree for the same normal force.

The driven roll may have a surface arranged to engage with a wood block, which is a smooth steel surface. This has the advantage that the lifetime of the feed roll is prolonged as a minimum of wear takes place.

According to an embodiment of the present invention, the separation wheel may be made up of a sandwich structure comprising a number of stopping finger plates arranged on an axle, and wherein between each of the plates a structure comprising the idler rolls is arranged, so that each stopping finger is made up of a protrusion on each plate.

According to an embodiment there is presented a system according to any of the embodiments according to the second aspect arranged to carry out any method according to any embodiment according to the first aspect.

According to a third aspect, there is provided a finger jointer system comprising a feeder system according to the third aspect and a finger jointer arranged so as to receive wood blocks from the receiving conveyor.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The feeder system according to the invention will now be described in more detail with regard to the accompanying figures. The figures show one way of implementing the present invention and is not to be construed as being limiting to other possible embodiments falling within the scope of the attached claim set.
FIG. 1 shows a side-view of a feeder system according to the present invention.
FIG. 2 shows illustrates a method for receiving wood blocks, separating wood blocks and feeding a separated wood block.
FIG. 3 is a perspective view of a feeder system according to an embodiment of the present invention.
FIG. 4 shows a perspective view of a feeder system, where also feeding and receiving conveyors are shown.
FIG. 5 shows a perspective view of a feeder system where feeding and receiving conveyors are not depicted for providing a better view of the separation wheel.
FIGS. 6-9 shows perspective views of a separation wheel according to an embodiment of the present invention.

### DETAILED DESCRIPTION OF AN EMBODIMENT

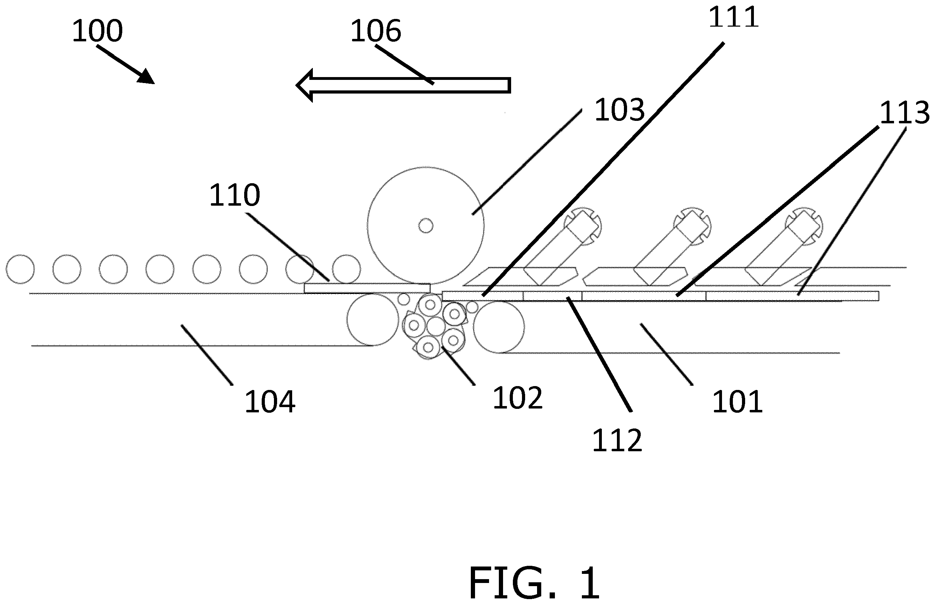

FIG. 1 shows a side-view of a feeder system 100 according to the present invention. More particularly, the figure shows a feeder system 100 comprising a feeding conveyor 101, a separation wheel 102, a driven roll 103 and a receiving conveyor 104. The figure furthermore shows a plurality of wood blocks, including a transferred wood block 110 (which is transferred to the receiving conveyor 104), a first wood block 111 (which is the first wood block on the feeding conveyor as seen in a direction from the separation wheel, and which wood block is blocked by a stopping finger of the separation wheel 102 in a rest position), a second wood block 112 (which is the next wood block in line after the first wood block) and further wood blocks 113. In this embodiment, the separation wheel comprises 5 stopping fingers and 5 idler rolls. The separation wheel 102 is placed partially below a plane coincident with the surface of the feeding conveyor 101 and protrudes through said plane so that a stopping finger may be positioned in the path of the wood blocks from the feeding conveyor 101. The driven roll 103 is placed above the separation wheel. The receiving conveyor 104 has a surface being slightly above said plane, which may be beneficial for receiving the wood blocks which have been lifted by the idler rolls during transfer from the feeding conveyor 101 to the receiving conveyor 104.

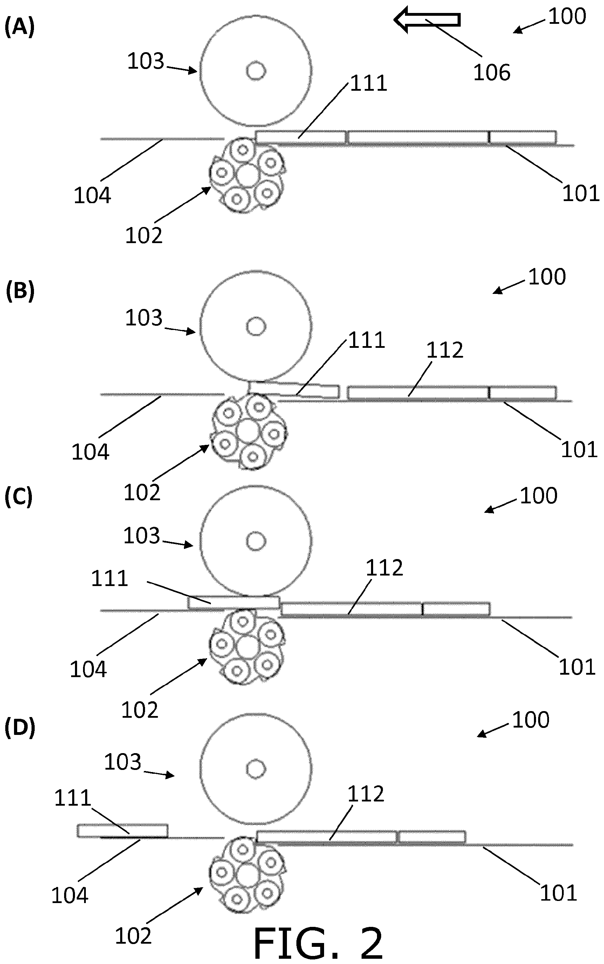

FIG. 2 shows illustrates a method for receiving wood blocks, separating wood blocks and feeding a separated wood block. More particularly, subfigure (A) shows a situation similar to the situation described in connection with FIG. 1. Subfigure (B) shows a subsequent situation where the separation wheel is in the process of being rotated from the rest position it was in in subfigure (A) to the subsequent rest position (corresponding to the circumferentially next stopping finger being in a position blocking the second wood block 112). During this rotation an idler roll of the separation wheel 102 presses said first wood block 111 against the driven roll 103, which enables moving by means of the driven roll 103 the first wood block 111 in a transport direction 106, thereby transferring the first wood block to the receiving conveyor 104 as schematically depicted in subfigures (B)-(D). The figures also shows, cf., e.g., subfigure (C) that the method comprises arranging, after said rotating, the separation wheel in another rest position. It may be noted that this may be realized before the first wood block is fully transferred to the receiving conveyor 104, but due to the idler roller, the first wood block 111 may still be moved with little or no friction over the separation wheel 102. In subfigure (D) the first wood block 111 is moved to the receiving conveyor 104 and the second wood block 112 is blocked by a stopping finger of the separation wheel 102.

A high capacity may for example facilitated by having wood blocks queueing with adjoining end faces on the feeding conveyor 101, such as an accumulation conveyor, the first wood block 111, such as the front most wood block (i.e., the wood block on the feeding conveyor being closest to the separation wheel), being stopped by a stopping finger of the separation wheel 102 being in a rest position. The fist wood block 111 will thus be in rest and will have a speed of 0 m/s in the transport direction 106. Once the separation wheel rotates and the wood block is pressed against the driven roll 103, i.e. the wood block is clamped between the idler roll and the driven roll 103, the wood block experiences an acceleration due to the driven roll 103 engaging with the wood block, for example by exerting a normal force and a friction force to the wood block, which allows the wood block to be moved in the transport direction, such as at a speed corresponding to the rotational tangential speed of the driven roll at its periphery. In this way, the wood block is rapidly accelerated and may continue travelling on the receiving conveyor 104.

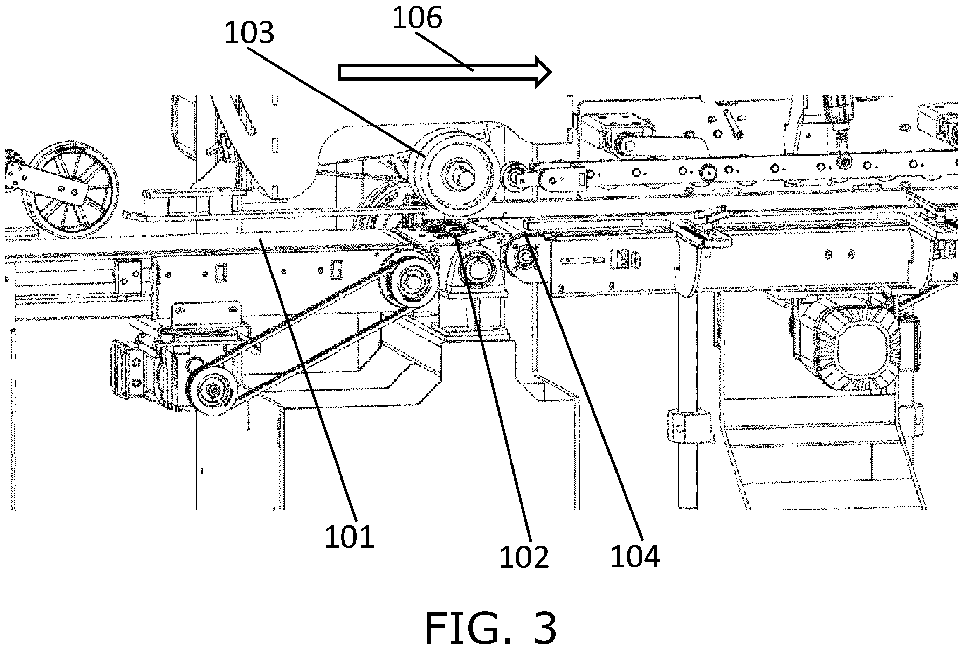

FIG. 3 is a perspective view of a feeder system according to an embodiment of the present invention.

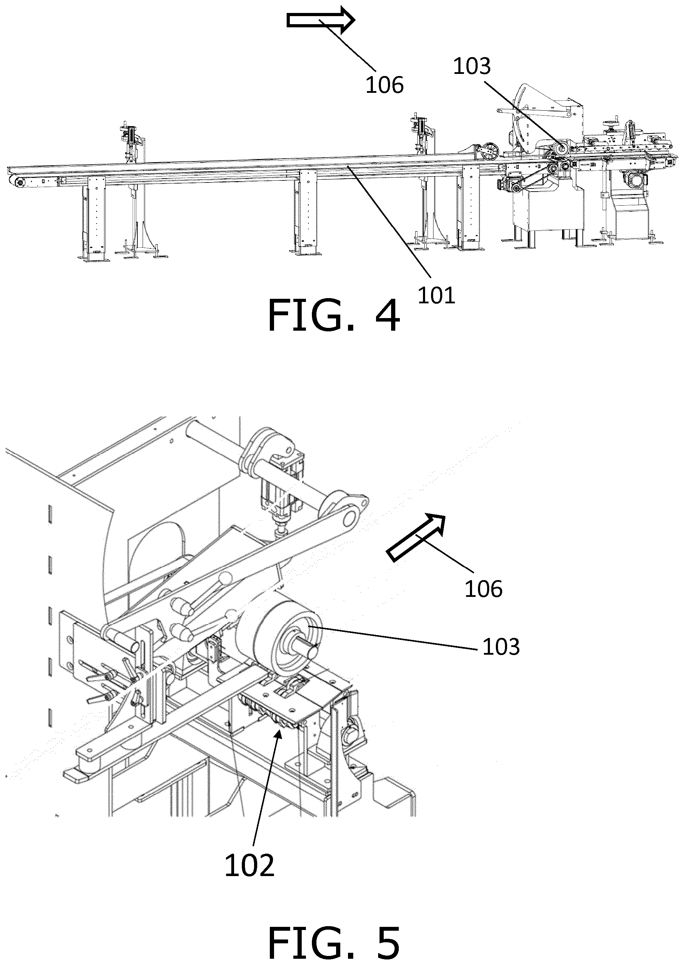

FIG. 4 shows a perspective view of a feeder system, where a larger part of the system is shown with respect to FIG. 3.

FIG. 5 shows a perspective view of a feeder system where feeding and receiving conveyors are not depicted for providing a better view of the separation wheel 102.

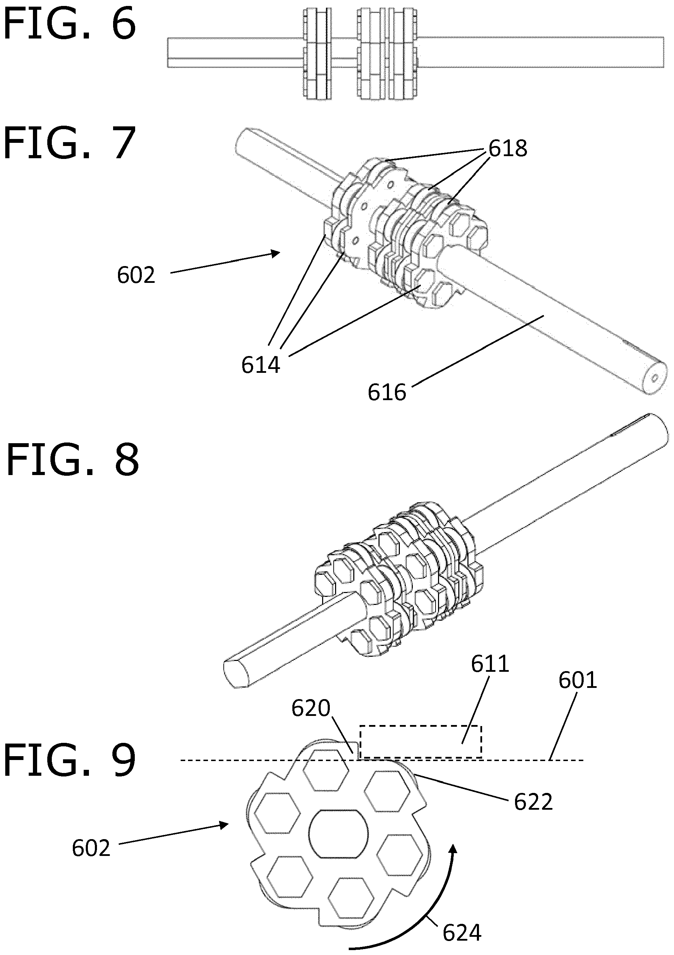

FIGS. 6-9 shows perspective views of a separation wheel according to an embodiment of the present invention. In this embodiment, the separation wheel 102 may be made up of a sandwich structure comprising a number of stopping finger plates 614 arranged on an axle 616, and wherein between each of the plates a structure 618 comprising the idler rolls is arranged, so that each stopping finger is made up of a protrusion on each plate.

FIG. 7 shows an axial view of a separation wheel 602. In this embodiment, the separation wheel comprises 6 stopping fingers and 6 idler rolls. The separation wheel 602 may be placed partially below a plane 601 coincident with a surface of a feeding conveyor and protrudes through said plane so that a stopping finger 620 may be positioned in the path of wood blocks, such as a first wood block 611, from a feeding conveyor. A driven roll may be placed above the separation wheel 602. The separation wheel has idler rolls which may be each be described as paired with a stopping finger. For example an idler roll 622 may be seen as paired with stopping finger 620, which idler roll is the next idler roll in a direction against a direction of rotation 624 as seen from a position of a blocked (first) wood block 611 (which is blocked by stopping finger 620). This may have the consequence that upon rotation in a direction of rotation 624, the idler roll 622 (which has at least a portion being further away from the axis of the separation wheel 602 than at least a portion of the first wood block 611) will come into contact with the first wood block 611 and press this wood block against a driven roll. During said rotation, the next stopping finger will enter into a blocking position ensuring that the next (second) wood block is blocked, so that one only one wood block is transferred at a time.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for receiving wood blocks, separating wood blocks and feeding the separated wood blocks, said method comprising
- transporting wood blocks via a feeding conveyor (101) to a separation wheel (102, 602), said separation wheel comprising
i. one or more circumferentially arranged stopping fingers (620), and
ii. one or more idler rolls (622),
- arranging the separation wheel (102, 602) in one of one or more rest positions where in each of the one or more rest positions a stopping finger (620) is arranged to block passage of a wood block (111, 611) from the feeding conveyor (101) to a receiving conveyor (104) arranged for receiving wood blocks from the separation wheel (102, 602) and transporting the wood blocks away from the separation wheel,
- blocking a first wood block (111, 611) by said first wood block contacting one of the one or more stopping fingers,
- rotating the separation wheel (102, 602), wherein during said rotating an idler roll (622) of the separation wheel presses said first wood block against a driven roll (103),
- moving by means of the driven roll (103) the first wood block (111, 611) in a transport direction (106), thereby transferring the first wood block to the receiving conveyor (104), and
- arranging, after said rotating, the separation wheel (102, 602) in the same or another rest position.

2. The method according to claim 1, wherein during the rotating of the separation wheel (102, 602),
- the stopping finger (620) blocking passage of the first wood block is moved away from a position blocking passage of the first wood block
and/or
- the idler roll (622), which presses upon the first wood block, displaces the wood block
so that the rotating of the separation wheel (102, 602) enables and ensures passage of the first wood.

3. The method according to any one of the preceding claims, wherein said arranging, after said rotating, the separation wheel (102, 602) in the same or another rest position is carried out so that a second wood block (112) is blocked thereby enabling and ensuring passage of only the first wood block in connection with said rotating.

4. The method according to any of the preceding claims, wherein a largest dimension of each of the wood blocks during transport with the feeding conveyor (101) is parallel with a conveying direction of the feeding conveyor.

5. The method according to any one of the preceding claims, wherein the separation wheel (102, 602) comprises a number N of stopping fingers, N being greater than or equal to 1, and wherein a rotation of said separation wheel (102, 602) corresponds to 1/N parts of a complete revolution, so that the separation wheel is stopped in N number of rest positions during a full revolution.

6. The method according to claim 5, wherein an open time slot is defined as a time it takes for the separation wheel (102, 602) to rotate 1/N parts of a complete revolution, and wherein
- said open time slot,
is less than
- a minimum wood block length divided by a feeding conveyor (101) speed.

7. The method according to any of the preceding claims, wherein the driven roll is arranged in relation to the separation wheel (102, 602) so that, when the separation wheel (102, 602) is in a rest position, a smallest distance between the separation wheel and the driven roll is smaller than a dimension of a wood block measured in a direction perpendicular to the transport direction and perpendicular to an axis of the separation wheel (102, 602).

8. The method according to any of the preceding claims, wherein in the rest position, at least one idler roll (622) is arranged to have an outer surface which is closer to the driven roll than any stopping finger.

9. A feeder system (100) for receiving wood blocks, separating wood blocks and feeding the separated wood blocks, said feeder system comprising
- a separation wheel (102, 602) comprising
i. one or more circumferentially arranged stopping fingers, and
ii. one or more idler rolls,
- a feeding conveyor (101) arranged for transporting wood blocks to the separation wheel (102, 602) and feeding wood blocks to the separation wheel,
- a receiving conveyor (104) arranged for receiving wood blocks from the separation wheel (102, 602) and transporting the wood blocks away from the separation wheel,
- a driven roll (103),
wherein the separation wheel (102, 602) may stopped in one or more rest positions and may furthermore be rotated from one rest position to the same or another rest position, where in each of the one or more rest positions a stopping finger is arranged to block passage of a wood block from the feeding conveyor to the receiving conveyor, and
wherein, during a rotation of said separation wheel from one rest position to the same or another rest position, the separation wheel (102, 602) is arranged so that an idler roll may press a wood block against the driven roll so as to enable the driven roll to engage with the wood block and to move the wood block in a transport direction thereby enabling the wood block to be transferred to the receiving conveyor.

10. The feeder system (100) according to claim 9, wherein the feeding conveyor (101) is an accumulation conveyor.

11. The feeder system (100) according to claims 9 or 10, wherein the separation wheel (102, 602) is arranged to allow passage of a single wood block at a time.

12. The feeder system (100) according to any of claims 9-11, wherein, in an operating condition of the feeder system, the driven roll (103) is placed above the separation wheel (102, 602).

13. The feeder system (100) according to any of claims 9-12, further comprising a sensor being arranged to detect when a sensed wood block is positioned so that said rotation of the separation wheel (102, 602) would cause said sensed wood block to be moved in the transport direction.

14. The feeder system (100) according to any of claims 9-14, wherein the driven roll and the feeding conveyor are arranged so that
- an acceleration of a wood block pressed against the driven roll,
is larger than
- an acceleration of a wood block on the feeding conveyor.

15. A feeder system (100) according to any of claims 9-14 arranged to carry out the method according to any of claims 1-8.
